# EUROPÄISCHE PATENTSCHRIFT

(11) **EP 1 034 028 B1**
(45) Veröffentlichungstag und Bekanntmachung des Hinweises auf die Patenterteilung: **26.06.2002**
(21) Anmeldenummer: 98956851.4
(22) Anmeldetag: 17.10.1998
(51) Int. Cl.: B01D 63/10

(54) **WICKELMODUL**
POCKET FILTER MODULE
MODULE DE FILTRAGE EN FORME DE POCHE

(30) Priorität: 24.10.1997 DE 19747004
(43) Veröffentlichungstag der Anmeldung: 13.09.2000
(73) Patentinhaber: SARTORIUS AG, 37075 Göttingen (DE)
(72) Erfinder: SCHMIDT, Hans-Weddo, D-37181 Hardegsen (DE)
(86) Internationale Anmeldenummer: EP9806589
(87) Internationale Veröffentlichungsnummer: WO9921645

(56) Entgegenhaltungen:
- EP-A- 0 581 544

## Beschreibung

Die Erfindung betrifft einen Wickelmodul, der zur Filtration von Fluiden verwendet wird, und der mit einem Wickel ausgestattet ist, der aus mindestens einer Membrantasche mit einem inneren Abstandshalter und aus mindestens einem äußeren Abstandshalter zur Ausbildung von Fluidkanälen für Permeat, Feed und/oder Retentat besteht.

Die EP-A-0 581 544 beschreibt einen Wickelmodul mit Abstandshaltern, die auf beiden Seiten von mindestens je einer Lage eines flächigen fluiddurchlässigen Schutzmterials bedeckt sind. Das Schutzmaterial besitzt eine feinere Struktur als die Abstandshalter, wodurch eine mechanische Zerstörung der Membran durch Eindrücken in die offenere Struktur der Abstandshalter vermieden werden soll.

Wickelmodule werden für Filtrationsprozesse im Getränke-, Lebensmittel-, Pharma-, Chemie- und Laborbereich sowie im Umweltschutz und in der Biotechnologie benötigt, in denen es auf die Abtrennung flüssiger oder partikulärer Bestandteile, wie z.B. Proteine, Mikroorganismen, Zellen usw. und die Vermeidung von Kontaminationen der zu filtrierenden Fluide ankommt.

Wickelmodule der erfindungsgemäßen Art bestehen aus einem in einem mit Fluidanschlüssen versehenen Gehäuse eingeschlossenen Wickel, der beispielsweise aus mindestens einer Membrantasche mit einem inneren Abstandshalter und aus mindestens einem äußeren Abstandshalter zur Ausbildung der Fluidkanäle für Permeat, Feed und/oder Retentat besteht, die spiralförmig um ein fluiddurchlässiges Kernrohr zu dem Wickel gewickelt sind und wobei die mindestens eine Membrantasche über den inneren Abstandshalter mit dem Kernrohr in kommunizierender Verbindung steht. Je nach Anordnung der Fluidanschlüsse können die Wickelmodule im Crossflow- oder im Dead-End-Modus betrieben werden. Der Wickel kann auch aus Zuschnitten von Flachmembranen mit dazwischen befindlichen flächigen Abstandshaltern spiralförmig gewickelt sein, wobei die Abstandshalter Fluidkanäle für Permeat, Feed und/oder Retentat bilden. Zur Ausbildung der Fluidkanäle sind entsprechend benachbarte Flachmembranen in ihren Randbereichen fluiddicht zu Membrantaschen verbunden. Je nach Anordnung dieser Verbindungen können auch diese Wickelmodule im Crossflowoder im Dead-End-Modus betrieben werden.
Beim Betrieb der Wickelmodule werden die Membranen starken mechanischen Beanspruchungen ausgesetzt. Der mechanische Streß tritt vor allem im Bereich der Faltenkanten der Membrantaschen auf. Besonders gefährdet ist dabei der geschlossene Bereich der Stirnseite der Membrantasche, die im abgewickelten Zustand dem Kernrohr abgewandt ist. In diesem Bereich kommt es häufig zu Membrandefekten, wodurch der gesamte Wickelmodul unbrauchbar wird. Schädigungen der Membranen können auch dadurch auftreten, daß die Membranen während des Filtrationsbetriebs häufig in die offenen Räume, die sich zwischen den Maschen von Geweben, Gewirken oder Gitterwerken, aus denn die Abstandshalter bevorzugt bestehen, gedrückt und wieder herausgesprengt werden.
Es ist bekannt, im inneren Bereich der Faltenkante an der Stirnseite der Membrantasche einen Klebstoff zur Membranverstärkung einzubringen oder gemäß der US-A 4,842,736 auf den äußeren Bereich der Faltenkante ein leicht schmelzbares thermoplastisches Material in die Verstärkung einer verstärkten Membran einzubringen, welches die Poren der Verstärkung vollständig dicht anfüllt. Nach der EP 0 486 190 A2 wird auf den äußeren Bereich der Faltenkante der Membrantasche aus einer integral verstärkten Membran ein Streifen einer dichten Folie aus einem thermoplastischen Material aufgebracht und durch Hitze- und Druckeinwirkung von der Membranseite her mit der Verstärkung und der Membran verbunden. Dabei kollabieren die Poren der Membran, so daß sie in diesem Bereich fluidundurchlässig wird. Nachteilig ist, daß bei diesen Lösungen die filtrationswirksame Membranfläche und damit die Leistung des Wickelmoduls verringert wird und daß im Randbereich der Einwirkung der heißen Schmelze des thermoplastischen Materials im Falle hydrophiler Membranen Randhydrophobien auftreten und die Wickelmodule mittels Beaufschlagung mit unter Druck stehenden Testgasen nicht auf Integrität testbar sind. Weitere Nachteile der Verwendung von Klebstoffen und thermoplastischer Materialien bestehen darin, daß benachbart Nähte der Membrantaschen aus anderen Polymeren gelöst werden und im Falle der Zersetzung kontaminierende Stoffe eingeschleppt werden.

Die Aufgabe der Erfindung besteht deshalb darin, einen Wickelmodul zu schaffen, bei dem die Membranen der Membrantasche des Wickels vor mechanischer Zerstörung derart geschützt sind, daß sich der Wickelmodul durch hohe Filtrationsleistung und Filtrationssicherheit auszeichnet.

Die Aufgabe wird gelöst durch einen Wickelmodul nach dem Oberbegriff des Anspruchs 1, bei dem der Abstandshalter, der sich im Inneren der Membrantasche befindet, auf beiden Seiten und im Bereich der Stirnseite, die dem geschlossenen Ende der Membrantasche zugewandt ist, über seine gesamte Breite und Länge bis zur Verbindung der Membrantasche mit dem Kernrohr von einem flächigen, fluiddurchlässigen Schutzmaterial überdeckt ist.
Das flächige, fluiddurchlässige Schutzmaterial verhindert zum einen, daß die Membranen periodisch bei Beaufschlagung der Membrantaschen mit der für die Filtration erforderlichen Druckdifferenz in die Konturen, Maschen oder groben Poren des inneren Abstandshalters hineingepreßt und bei Druckschwankungen wieder herausgedrückt werden und zum anderen, daß die Membranen gleichzeitig gegen die Kanten der Stirnseite des inneren Abstandshalters, die dem geschlossenen Ende der Membrantasche zugewandt ist, gerieben werden. Die Abstandshalter bestehen in der Regel aus Faservliesen Geweben, Gewirken, Gitterwerken oder aus geprägtenn Folien. Sie werden größengerecht aus derartigen Materialien herausgeschnitten oder ausgestanzt. Dabei entstehen scharfe Schnitt- und Stanzkanten oder vor- beziehungsweise abstehende Fasern, die ungeschützt zu einer Verletzung der empfindlichen Membranen führen können. Die Überdeckung derartiger Kanten oder Fasern durch das Schutzmaterial verhindert eine Verletzung der Membranen. Durch die Überdeckung wird auch eine Verletzung von Nähten der Membrantasche verhindert, wenn zum Beispiel das geschlossenen Ende der Membrantasche durch Verkleben oder Verschweißen der Membranen gebildet ist. Die Überdeckung des inneren Abstandshalters über die gesamte Länge hat den Vorteil, daß insbesondere bei Wickeln aus mehreren Membrantaschen ein gleichmäßiger Wickel erzeugt werden kann. Bei verkürzten Überdeckungen entstehen dort, wo das Schutzmaterial endet, Absätze im Radius des Wickels, die durch gesonderte Maßnahmen ausgeglichen werden müßten.
Durch die Überdeckung des inneren Abstandshalters mit dem Schutzmaterial, daß vorzugsweise aus einem Faservlies besteht, wird außerdem erricht, daß die Membranen im Bereich des geschlossenen Endes der Membrantasche nicht geknickt werden, wenn sie bei Druckbeaufschlagung an den inneren Abstandshalter gepreßt werden. Durch das Schutzmaterial wird die Dicke des inneren Abstandshalters um das zweifache der Dicke des Schutzmaterials vergrößert, wodurch die Membranen im Bereich des geschlossenen Endes der Membrantasche U-förmig gerundet verbleiben. Damit werden V-förmige oder eckige Knickungen der Membranen vermieden, die während des Betriebs des Wickelmoduls leicht zu Membranbrüchen führen können. Obwohl das Schutzmaterial selbst den inneren Abstandshalter im Bereich seiner Stirnseite kantig oder spitz überdecken kann, wird die Überdeckung vorzugsweise ebenfalls gerundet vorgenommen. Zur Vermeidung scharfkantiger Knickungen der Membranen ist es außerdem vorteilhaft, wenn die Dicke des inneren Abstandshalters größer gewählt wird als die Dicke der Membran der Membrantasche. Vorzugsweise sollte der innere Abstandshalter eine Dicke von 400 bis 1200 µm aufweisen, wenn die Membran selbst eine Dicke von 200 µm besitzt. Zur Erreichung der vorteilhaften Dicke hat es sich bewährt, einen aus mehreren einzelnen Lagen zusammengesetzten inneren Abstandshalter zu verwenden, beispielsweise aus zwei kongruenten Faservliesen mit einer Dicke von je 300 µm. In einer bevorzugten Ausführungsform der Erfindung beläßt man zwischen der Stirnseite des inneren Abstandshalters und dem ihr zugewandten geschlossenen Ende der Membrantasche einen Abstand von bis zu 1 cm, vorzugsweise von bis zu 0,5 cm. Durch einen derartigen Abstand werden Stöße des inneren Abstandshalters gegen das geschlossene Ende der Membrantasche abgefedert oder vermieden.
In einer bevorzugten Ausführungsform der Erfindung erstreckt sich das Schutzmaterial über den Bereich der Stirnseite und von den Kanten des Stimseitenbereichs ausgehend beidseitig des Abstandshalters lediglich über eine Länge von 1 bis 3 cm, vorzugsweise von 2 cm. Diese Ausführungsform ist besonders vorteilhaft, wenn der Wickel aus wenigen oder aus nur einer Membrantasche gefertigt wird. Neben der Materialersparnis an Schutzmaterial wird auch die Filtrationsleistung des Wickelmoduls durch den Filtrationswiderstand des Schutzmaterials nicht unnütz gemindert, wobei generell Schutzmaterialien verwendet werden, die einen geringeren Filtrationsiderstand besitzen als die Membranen der Membrantaschen. Wenn sich das Schutzmaterial nicht über die gesammte Länge des inneren Abstandshalters erstreckt, besteht die Gefahr, daß das Schutzmaterial während der Herstellung und des Betriebs des Wickelmoduls verrutscht und den Bereich der Stirnseite nicht mehr wie vorgesehen überdeckt. Um das zu vermeiden, wird in einer bevorzugten Ausführungsform der Erfindung das Schutzmaterial zumindest punktuell an dem inneren Abstandshalter fixiert. Die Fixierung erfolgt beispielsweise durch Einwirkung von Temperatur und Wärme, insbesondere wenn thermoplastische Materialien vorliegen, wie zum Beispiel ein Faservlies als Schutzmnaterial und ein Gewebe aus thermoplastischen Fasern als innerer Abstandshalter. Die Fixierung des Schutzmaterals am inneren Abstandshalter hat die Vorteile, daß die filtrationswirksame Fläche der Membranen durch die Fixierung und damit die Filtrationsleistung nicht verringert und die Membran nicht geschädigt wird. Das wäre bei Fixierung des Schutzmaterials an der Membran nicht der Fall. Besonders empfindlich sind die häufig verwendeten asymmetrischen Membranen, bei denen sich auf einer grobporösen Stützschicht eine filtrationswirksame engporige Schicht in Form einer Haut befindet. Bei Fixierungen von Schutzmaterialien an der Hautseite derartiger Membranen, würde leicht zu einer Ablösung der Haut von der Stützschicht der Membran führen.
Dadurch, daß beim Gegenstand der Erfindung jegliche Einwirkung von Temperatur oder von heißen Schmelzen auf die Membranen der Membrantaschen vermieden wird, sind die erfindungsgemäßen Wickelmodule aus hydrophilen Membranen mittels Einwirkung von unter Druck stehenden Testgasen auf Integrität prüfbar. Solche Integritätstest sind als Blaspunkt-, Diffusions- und Druckhaltetest bekannt. Durch die Möglichkeit der Durchführung derartiger Tests wird bei Verwendung der erfindungsgemäßen Wickelmodule eine hohe Filtrationssicherheit gewährleistet. Das ist in sensiblen Bereichen, insbesondere bei Sterilfiltrationen oder der Gewinnung von Wertstoffen, von besonderer Bedeutung.
Für die erfindungsgemäßen Wickelmodule werden vorzugsweise Membranen aus organischen Polymeren verwendet, die für die Reversosmose, Pervaporation, Ultrafiltration, Mikrofiltration und Membranchromatographie geeignet sind. Aufgrund ihrer mechanischen Empfindlichkeit werden diese Membranen vorzugsweise in Form von textilverstärkten Membranen eingesetzt. Besonders geeignet sind dabei laminierte Membranen, insbesondere mit Faservliesen laminierte Membranen und darunter Faservliese, die aus Kernmantelfasern bestehen. Bevorzugt werden Ultrafiltrations- und Mikrofiltrationsmembranen eingesetzt. Erfindungsgemäß ist bei Verwendung textilverstärkter Membranen die Membranseite dem inneren Abstandshalter zugewandt.

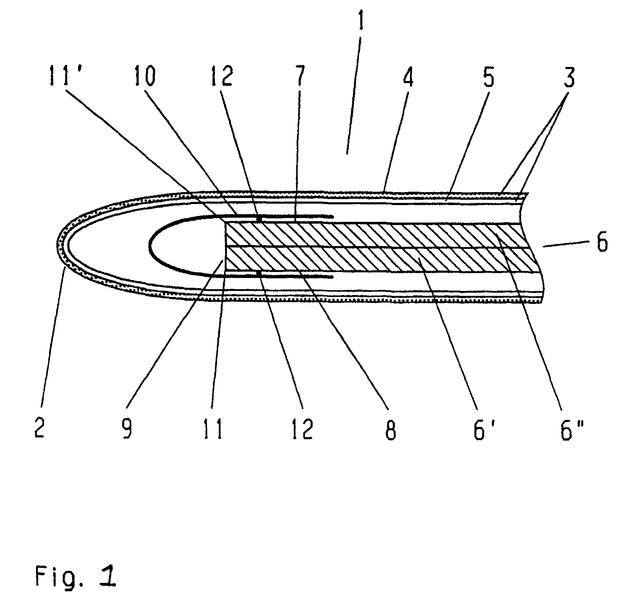

Die Erfindung wird anhand der Figur näher erläutert.

Die Figur zeigt schematisch einen Schnitt durch eine erfindungsgemäße Ausführungsform einer Membrantasche **1** im Bereich ihres geschlossenen Endes **2.** Die Membrantasche **1** besteht aus einem flächigen Zuschnitt einer verstärkten Membran **3,** bei der die Verstärkung **4** nach außen gerichtet ist, und bei der die Membran **5** dem inneren Abstandshalter **6** zugewandt ist. Der innere Abstandshalter besteht aus zwei kongruenten aufeinander liegenden Abstandshaltern **6', 6"**. Der innere Abstandshalter **6** ist auf beiden Seiten **7, 8** und im Bereich seiner Stirnseite **9**, die dem geschlossenen Ende **2** der Membrantasche **1** zugewandt ist, über seine gesamte Breite von einem flächigen fluiddurchlässigen Schutzmaterial **10** überdeckt. Das Schutzmaterial erstreckt sich über den Bereich der Stirnseite **9** und von den Kanten **11, 11'** des Stirnseitenbereichs ausgehend beidseitig des Abstandshalters **6** über eine Länge von 1 bis 3 cm. Das Schutzmaterial **10** ist punktuell **12** am Abstandshalter fixiert, wodurch seine Lage bei der Montage und im Betrieb des Wickelmoduls stabilisiert ist. Das Schutzmaterial überdeckt den Bereich der Stirnseite **9** des inneren Abstandshalters **6** von den Kanten **11, 11'** her U-förmig gerundet. Zwischen der Stirnseite **9** des inneren Abstandshalters **6** und dem ihr zugewandten Ende **2** der Membrantasche **1** ist ein Abstand von bis zu 1 cm vorhanden.

## Patentansprüche

1. Mit Anschlüssen an Fluidkanälen versehener Wickelmodul mit einem Wickel, der aus mindestens einer Membrantasche (1) mit einem inneren Abstandshalter (6) und aus mindestens einem äußeren Abstandshalter zur Ausbildung der Fluidkanäle für Permeat, Feed und/oder Retentat besteht, die spiralförmig um ein fluiddurchlässiges Kernrohr zu dem Wickel gewickelt sind und wobei die mindestens eine Membrantasche (1) über den inneren Abstandshalter (6) mit dem Kernrohr in kommunizierender Verbindung steht,
**dadurch gekennzeichnet, daß**
der innere Abstandshalter (6) auf beiden Seiten (7, 8) und im Bereich der Stirnseite (9), die dem geschlossenen Ende (2) der Membrantasche (1) zugewandt ist, über seine gesamte Breite und Länge bis zur Verbindung der Membrantasche (1) mit dem Kernrohr von einem flächigen fluiddurchlässigen Schutzmaterial (10) überdeckt ist.

2. Mit Anschlüssen an Fluidkanälen versehener Wickelmodul nach Anspruch 1,
**dadurch gekennzeichnet, daß**
die Überdeckung des inneren Abstandshalters (6) im Bereich seiner Stirnseite (9) durch das Schutzmaterial (10) gerundet, spitz oder kantig ausgebildet ist.

3. Mit Anschlüssen an Fluidkanälen versehener Wickelmodul nach den Ansprüchen 1 und 2,
**dadurch gekennzeichnet, daß**
sich das Schutzmaterial (10) über den Bereich der Stirnseite (9) und von den Kanten (11, 11') des Stirnseitenbereichs ausgehend beidseitig (7, 8) des Abstandshalters (6) nur über eine Länge von 1 bis 3 cm, vorzugsweise von 2 cm erstreckt.

4. Mit Anschlüssen an Fluidkanälen versehener Wickelmodul nach Anspruch 3,
**dadurch gekennzeichnet, daß**
das Schutzmaterial (10) punktuell (12) am Abstandshalter fixiert ist.

5. Mit Anschlüssen an Fluidkanälen versehener Wickelmodul nach den Ansprüchen 1 bis 4,
**dadurch gekennzeichnet, daß**
das Schutzmaterial (10) einen geringeren Filtrationswiderstand besitzt als die Membranen (5) der Membrantaschen (1).

6. Mit Anschlüssen an Fluidkanälen versehener Wickelmodul nach den vorstehenden Ansprüchen,
**dadurch gekennzeichnet, daß**
das Schutzmaterial (10) vorzugsweise ein Faservlies ist.

7. Mit Anschlüssen an Fluidkanälen versehener Wickelmodul nach Anspruch 1,
**dadurch gekennzeichnet, daß**
der innere Abstandshalter (6) aus mindestens einem Faservlies, Gewebe, Gewirke, Gitterwerk oder einer geprägten Folie besteht.

8. Mit Anschlüssen an Fluidkanälen versehener Wickelmodul nach Anspruch 7,
**dadurch gekennzeichnet, daß**
die Dicke des inneren Abstandshalters (6) größer als die Dicke der Membran (5) der Membrantaschen (1) ist.

9. Mit Anschlüssen an Fluidkanälen versehener Wickelmodul nach Anspruch 7,
**dadurch gekennzeichnet, daß**
zwischen der Stirnseite (9) des inneren Abstandshalters (6) und dem ihr zugewandeten geschlossenen Ende (2) der Membrantasche (1) ein Abstand von bis zu 1 cm, vorzugsweise von bis zu 0,5 cm vorhanden ist.

10. Mit Anschlüssen an Fluidkanälen versehener Wickelmodul nach den vorstehenden Ansprüchen,
**dadurch gekennzeichnet, daß**
die Membrantaschen (1) aus textilverstärkten Membranen (3) bestehen.

11. Mit Anschlüssen an Fluidkanälen versehener Wickelmodul nach Anspruch 10,
**dadurch gekennzeichnet, daß**
bei den textilverstärkten Membranen (3) die Membranseite (5) dem inneren Abstandshalter (6) zugewandt ist.

## Claims

1. Wound module provided with connections to fluid channels, comprising a winding which consists of at least one membrane pocket (1) with an inner spacer (6) and of at least one outer spacer for formation of fluid channels for permeate, feed and/or retentate, which are wound spirally around a fluid-permeable core tube to form the winding, wherein the at least one membrane pocket (1) is disposed in communicating connection with the core tube by way of the inner spacer (6) and wherein the inner spacer (6) is covered at each of the two sides (7, 8) and over the entire width and length thereof up to the connection of the membrane pocket (1) with the core tube by a respective layer of a flat, fluid-permeable protective material, **characterised in that** the protective material consists of only a single layer and the inner spacer (6) is covered at both sides (7, 8) and in the region of the end face (9) facing the closed end (2) of the membrane pocket (1) by this one layer of flat, fluid-permeable protective material (10).

2. Wound module provided with connections to fluid channels according to claim 1, **characterised in that** the covering of the inner spacer (6) in the region of its end face (9) by the protective material (10) is formed to be rounded, pointed or edged.

3. Wound module provided with connections to fluid channels according to claims 1 and 2, **characterised in that** the protective material (10) extends over the region of the end face (9) and from the edges (11, 11') of the end face region going out at both sides (7, 8) of the spacer (6) only over a length of 1 to 3 cm, preferably 2 cm.

4. Wound module provided with connections to fluid channels according to claim 3, **characterised in that** the protective material (10) is fixed to the spacer at points (12).

5. Wound module provided with connections to fluid channels according to claims 1 to 4, **characterised in that** the protective material (10) has a smaller filtration resistance than the membranes (5) of the membrane pockets (1).

6. Wound module provided with connections to fluid channels according to the preceding claims, **characterised in that** the protective material (10) is preferably a fibrous fleece.

7. Wound module provided with connections to fluid channels according to claim 1, **characterised in that** the inner spacer (6) consists of at least one fibrous fleece, fabric, knitted material, lattice-structure or an embossed film.

8. Wound module provided with connections to fluid channels according to claim 7, **characterised in that** the thickness of the inner spacer (6) is greater than the thickness of the membrane (5) of the membrane pockets (1).

9. Wound module provided with connections to fluid channels according to claim 7, **characterised in that** a spacing of up to 1 cm, preferably up to 0.5 cm, is present between the end face (9) of the inner spacer (6) and the closed end (2), which faces it, of the membrane pocket (1).

10. Wound module provided with connections to fluid channels according to the preceding claims, **characterised in that** the membrane pockets (1) consist of textile-reinforced membranes (3).

11. Wound module provided with connections to fluid channels according to claim 10, **characterised in that** in the case of textile-reinforced membranes (3) the membrane side (5) faces the inner spacer (6).

## Revendications

1. Module à membranes enroulées muni de raccordements au niveau de canaux de fluide, avec un rouleau constitué d'au moins une poche (1) à membrane comportant un écarteur intérieur (6), et au moins un écarteur extérieur pour la formation des canaux de fluide destinés au perméat, à l'alimentation et/ou au rétentat, qui sont enroulés en forme de spirale autour d'un noyau tubulaire perméable aux fluides en formant le rouleau, la seule poche (1) à membrane au moins étant en liaison de communication avec le noyau tubulaire par l'intermédiaire de l'écarteur intérieur (6) et, jusqu'à la liaison de la poche (1) à membrane avec le noyau tubulaire, chacune des deux faces (7, 8) de l'écarteur intérieur (6) étant recouverte sur l'ensemble de sa largeur et de sa longueur par une couche de matériau de protection plat perméable aux fluides,
**caractérisé en ce que**
le matériau de protection n'est constitué que d'une seule couche, et **en ce que** l'écarteur intérieur (6) est recouvert sur les deux faces (7, 8) et, dans la zone de sa face frontale (9) orientée vers l'extrémité fermée (2) de la poche (1) à membrane, de cette seule couche de matériau de protection plat (10) perméable aux fluides.

2. Module à membranes enroulées muni de raccordements au niveau de canaux de fluide selon la revendication 1,
**caractérisé en ce que**
le recouvrement de l'écarteur intérieur (6) par le matériau de protection (10) est agencé de façon arrondie, pointue ou angulaire dans la zone de sa face frontale (9).

3. Module à membranes enroulées muni de raccordements au niveau de canaux de fluide selon les revendications 1 et 2,
**caractérisé en ce que**,
en partant des deux faces (7, 8) de l'écarteur (6), le matériau de protection (10) ne s'étend sur la zone de la face frontale (9) et à partir des bords (11, 11') de la zone de la face frontale, que sur une longueur de l'ordre de 1 à 3 cm, de préférence de 2 cm.

4. Module à membranes enroulées muni de raccordements au niveau de canaux de fluide selon la revendication 3,
**caractérisé en ce que**
le matériau de protection (10) est fixé de façon ponctuelle (12) sur l'écarteur.

5. Module à membranes enroulées muni de raccordements au niveau de canaux de fluide selon l'une quelconque des revendications 1 à 4,
**caractérisé en ce que**
la résistance à la filtration du matériau de protection (10) est plus faible que celle des membranes (5) des poches (1) à membranes.

6. Module à membranes enroulées muni de raccordements au niveau de canaux de fluide selon l'une quelconque des revendications précédentes,
**caractérisé en ce que** .
le matériau de protection (10) est de préférence un non-tissé.

7. Module à membranes enroulées muni de raccordements au niveau de canaux de fluide selon la revendication 1,
**caractérisé en ce que**
l'écarteur intérieur (6) est constitué d'au moins un non-tissé, un tissu, un tissu à mailles, un entrelacement ou un film gaufré.

8. Module à membranes enroulées muni de raccordements au niveau de canaux de fluide selon la revendication 7,
**caractérisé en ce que**
l'épaisseur de l'écarteur intérieur (6) est supérieure à l'épaisseur de la membrane (5) des poches (1) à membranes.

9. Module à membranes enroulées muni de raccordements au niveau de canaux de fluide selon la revendication 7,
**caractérisé en ce que**,
entre la face frontale (9) de l'écarteur intérieur (6) et l'extrémité fermée (2) de la poche (1) à membrane orientée vers elle, il existe un écartement pouvant aller jusqu'à 1 cm, de préférence jusqu'à 0,5 cm.

10. Module à membranes enroulées muni de raccordements au niveau de canaux de fluide selon l'une quelconque des revendications précédentes,
**caractérisé en ce que**
les poches (1) à membranes sont constituées de membranes (3) renforcées par du textile.

11. Module à membranes enroulées muni de raccordements au niveau de canaux de fluide selon la revendication 10,
**caractérisé en ce que**
la face (5) des membranes (3) renforcées par du textile est orientée vers l'écarteur intérieur (6).
